# NEW EUROPEAN PATENT SPECIFICATION

(11) **EP 0 690 878 B2**
(45) Date of publication and mention of the opposition decision: **29.12.2004**
(45) Mention of the grant of the patent: 29.12.1999
(21) Application number: 94913294.8
(22) Date of filing: 23.03.1994
(51) Int. Cl.: C08F 2/06, C08F 4/648, C08F 10/00

(54) **PROCESS FOR FORMING A GRANULAR RESIN**
VERFAHREN ZUR HERSTELLUNG GRANULÄREN HARZES
PROCEDE DE FORMATION D'UNE RESINE GRANULAIRE

(30) Priority: 25.03.1993 US 36796; 27.10.1993 US 141760
(43) Date of publication of application: 10.01.1996
(73) Proprietor: EXXONMOBIL OIL CORPORATION, Fairfax, VA 22037 (US)
(72) Inventor: LO, Frederick, Yip-Kwai, Edison, NJ 08818 (US); PRUDEN, Ann Lorette, R.D. No. 2, Bellemead, NJ 08502 (US)
(74) Representative: Hucker, Charlotte Jane
(86) International application number: PCT/US1994/003114
(87) International publication number: WO 1994/021691

(56) References cited:
- EP-A- 0 200 934
- EP-A- 0 279 863
- EP-A- 0 336 593
- EP-A- 0 416 928
- EP-A- 0 516 458
- WO-A-93/23439
- WO-A-94/14856
- DE-A- 3 612 376
- DE-A- 4 344 672
- US-A- 4 243 619
- US-A- 4 634 746
- US-A- 4 754 007
- US-A- 4 866 144
- US-A- 5 147 949
- US-A- 5 179 178
- US-A- 5 240 894

## Description

The invention relates to process for forming a granular resin. More particularly, the invention relates to a slurry process for polymerization and copolymerization of ethylene in the presence of supported catalysts comprising metallocenes of transition metals.

The use of metallocene compounds of transition metals as catalysts for polymerization and copolymerization of ethylene is a relatively recent development in the polymerization and copolymerization of ethylene.

Metallocenes can be described by the empirical formula CpₘMAₙB_{P}. These compounds in combination with alumoxane have been used to produce olefin polymers and copolymers, such as ethylene and propylene homopolymers, ethylene-butene and ethylene-hexene copolymers (see US-A-4542199 and US-A-4404344.,

Methylalumoxane (MAO) is used as co-catalyst with metallocene catalysts. It belongs to the class of alumoxanes which comprises oligomeric linear and/or cyclic alkylalumoxanes represented by the formula:

R-(Al(R)-O)ₙ-AlR₂

for oligomeric, linear alumoxanes;
and

(-Al(R)-O-)ₘ

for oligomeric cyclic alumoxane,
wherein n is 1-40, preferably 10-20; m is 3-40, preferably 3-20; and R is a C₁-C₈ alkyl group and preferably methyl.

Methylalumoxane is commonly produced by reacting trimethylaluminum with water or with hydrated inorganic salts, such as CuSO₄.5H₂O or Al₂(SO₄)₃.5H₂O.
Methylalumoxane can be also generated in situ in polymerization reactors by adding to them trimethylaluminum and water or water-containing inorganic salts. MAO is a mixture of oligomers with a very wide distribution of molecular weights and usually with an average molecular weight of about 1200. MAO is typically kept in solution in toluene.

EP-A-0336593, DE-C-4344672 and US-A-5147949 each discloses a polymerisation catalyst comprising a metallocene and an alumoxane supported on silica gel containing specific amounts of water.

US-A-52407894 discloses a catalyst comprising a dehydrated silica carrier, a metallocene and an alumoxane. The catalyst is useful in the polymerisation of propylene as a homopolymer or a copolymer with other olefins. Example 9 describes an ethylene polymerisation in which the catalyst is used in combination with tetraethylaluminium (TEAL). The density reported for the resulting polymer is 0.9479 g/cc.

In existing commercial slurry processes, attempts to produce LLDPE have been unsuccessful because polymer and/or catalyst solubilities limit the yields and also prevent efficient solvent separation and solid transfer downstream of the reactor.

First, if the polymer is soluble in the solvent, the soluble fraction typically swells, limiting the polymer content per unit reactor or solvent volume, and thus, the production rate. The resulting gel-like structure also tends to foul the reactor. Unacceptably low bulk density resins are produced.

Second, if the catalyst is soluble in the solvent or the monomer, the polymer chains grown from the catalyst have unacceptable particle morphology. The resins from the soluble catalyst fraction are typically very small particles ("fines"), which swell in the solvent to give again a gel-like structure.

The present invention provides a solution to these limitations. By reacting the metallocene/MAO solution with a reactive surface of a support, a new class of catalyst is formed. Under controlled conditions, this new class of catalyst produces polymer of good morphology without the problems described above.

According to the present invention there is provided a process for forming linear low density polyethylene (LLDPE) in granular form, the process comprising:
(a) dispersing a catalyst in the aliphatic solvent, under substantially anhydrous conditions, to form a slurry in a reaction vessel, wherein the catalyst comprises supported on a dehydrated carrier, a metallocene and an alumoxane;
(b) maintaining the slurry at an absolute pressure below 1000 psi (6.9 MPa) and a temperature of 20°C to 100°C;
(c) introducing ethylene and an alpha olefin selected from 1-butene, 1-propene and alpha olefins having 6 to 10 carbon atoms, into the reaction vessel, wherein the partial pressure of ethylene ranges from 20 to 1000 psi (0.14 to 6.9 MPa); and
(d) recovering from the reaction vessel granular LLDPE exhibiting a bulk density of 15 to 36 Ib./ft³ (240 to 580 Kg/m³), a specific density in the range 0.91 to 0.939 g/cc, an MFR of less than about 30, and an average particle size of 300 to 800 µm, wherein the aliphatic solvent is selected from the group consisting of isobutane, pentane, isomers of pentane, hexane, isomers of hexane, octane, isomers of octane, decane, dodecane and mixtures thereof. Advantageously, in step (d) the ethylene and alpha olefin are copolymerized to form the granular resin which is substantially insoluble in the solvent, and has an average particle size of 300 to 800 µm (microns).

The specific density is preferably less than 0.93.

In the preferred embodiment the support comprises silica, which is amorphous and porous and has a pore volume of 0.1 to 5 cc/gm, said silica having a concentration of silanol groups less than 2.5 mmole per gram of silica.

It is also preferred that the silica is contacted with a volume of a mixture comprising a metallocene and an aluminoxane, wherein said volume of said mixture is no greater than the total pore volume of said dehydrated silica.

The metallocene preferably has the formula, CpₘMAₙBₚ, wherein Cp is a substituted cyclopentadienyl group; m is 1 or 2; M is zirconium or hafnium; each of A and B is selected from the group consisting of a halogen atom, a hydrogen atom and an alkyl group; and m+n+p is equal to the valence of the metal M; and wherein said alumoxane has the formula (a) or (b) as follows:

(a) R-(Al(R)-O)ₙ-AlR₂

for oligomeric, linear alumoxanes;

(b) (-Al(R)-O-)ₘ

for oligomeric cyclic alumoxane; wherein n is 1-40, m is 3-40, and R comprises a C₁-C₈ alkyl group; and wherein said contacted silica is an activated catalyst.

Desirably, the catalyst is in the form of particles having a particle size in the range of 1 to 500 µm (microns).

The ratio of aluminum to transition metal (from the metallocene) in the catalyst is preferably from 70 to 350.

It is preferred that the amount of transition metal (on an elemental basis) ranges from 0.001 to 10 weight percent and the amount of aluminum (on an elemental basis) ranges from 1 to 40 weight percent; and wherein the Al: transition metal ratio (on an elemental basis) ranges from 25 to 10000:

The catalyst preferably comprises a metallocene selected from the group consisting of bis(n-butylcyclopentadienyl)metal dihalides, bis(n-butylcyclopentadienyl)metal hydridohalides, bis(n-butylcyclopentadienyl)metal monoalkyl monohalides, bis(n-butylcyclopentadienyl)metal dialkyls, bis(tetrahydroindenyl)metal halides and bis(indenyl)metal dihalides. More preferably, the catalyst comprises a metallocene selected from the group consisting of bis (iso-butylcyclopentadienyl)zirconium dichloride, bis(pentamethylcyclopentadienyl)zirconium dichloride, bis(tetrahydroindenyl)zirconium dichloride, bis(indenyl)zirconium dichloride, bis(1,3 dimethylcyclopentadienyl)zirconium dichloride, bis(methylcyclopentadienyl)zirconium dichloride, and bis(n-butylcyclopentadienyl)zirconium dichloride.

The solvent is preferably an alkane, in which case the alpha olefin in the solvent desirably provides a concentration of 0.1 to 50 weight percent, more preferably 0.1 to 30 weight percent.

The alkane preferably contains from 4 to 19 carbon atoms. Most preferably the solvent is selected from the group consisting of isobutane, pentane, isomers of pentane, hexane, isomers of hexane, heptane, isomers of heptane, octane, isomers of octane, decane, dodecane and mixtures thereof.

Desirably the boiling point of the solvent is less than 180°C.

The pressure in step (b) is preferably below 600 psi (4.1 MPa).

### The Slurry Process Conditions

The catalyst is dispersed in the solvent with agitation. Agitation is maintained throughout the polymerization (or copolymerization), by conventional means. The polymerization is conducted under anhydrous conditions.

The slurry catalytic polymerization of the invention is conducted at a total pressure of less than substantially 1000 psi (6.9 MPa). In general the total pressure ranges from 20 to 1000 psi (0.14 to 6.9 MPa) and more preferably from 100-600 psi (0.69 to 4.1 MPa).

Ethylene partial pressure ranges from substantially 20 to substantially 1000 psi (0.14 to 6.9 MPa), preferably from substantially 60 to substantially 600 psi (0.41 to 4.1 MPa). Hydrogen may be, optionally, introduced in the slurry polymerization. The hydrogen partial pressure can range from 0 to 20 psi (0 to 0.14 MPa), and is preferably less than 10 psi (0.069 MPa).

The temperature of the catalytic polymerization is in the range of 25°C to 100°C; the upper limit depends on solvent. For production of resin of specific density less than about 0.94, the temperature can be less than 90°C to as low as 40-45°C. Preferably, the temperature is between 55°C and 75°C, and most preferably from about 60°C to about 70°C, at pressures of about 125 psi (0.86 MPa). Residence times can range from 1 to 4 hours. Under these conditions, particulate polymer is formed in the slurry reactor, in the solvent. The average particle size of the product in the slurry reactor is in the range of 300 to 800 microns. Typically, the average particle size of the product in the slurry reactor is in the range of 450 to 650 microns.

The solvent is selected from the group consisting of isobutane, pentane and isomers thereof, hexane and isomers thereof, octane and isomers thereof. Petroleum fractions containing these compounds, generally in admixture, may also be employed.

In the experiments herein, the slurry contains 0.0047 to 0.01175 weight percent of catalyst or 40 to 100 mg of catalyst in 1000 cc of solvent. Typically, operation is at 70 mg catalyst per 1000 cc.

The amount of alpha olefin for copolymerization with ethylene provides a concentration in the solvent of 0.1 weight percent to 50 weight percent, preferably from 0.1 to 30 weight percent, and most preferably about 10 weight percent. The alpha is selected from propylene, 1-butene, and alpha olefins having 6 to 10 carbon atoms, including 4-methyl-1-pentene, 1-hexene, 1-heptene and 1-octene. Most preferably, the alpha olefin is one which contains 6 to 8 carbon atoms.

### The Preferred Catalyst Compositions

The anhydrous (free of water, purposefully added) catalysts used in the invention comprise a dehydrated carrier, an alumoxane and at least one metallocene. The catalyst is free-flowing and particulate in form comprising dry powder particles having a particle size of from about 1 µm (micron) to about 250 µm (microns), preferably from about 10 µm (microns) to about 150 µm (microns). The catalysts which contain only one transition metal in the form of a metallocene have an activity of at least about 200 kg polymer/g of transition metals. The aluminoxane and metallocene loading on the carrier is such that the amount of aluminum, (on an elemental basis) provided by the aluminoxane, on the carrier ranges from 1 to 40 weight percent, preferably from 5 to 30 weight percent, and most preferably from 5 to 15 weight percent. The optimum MAO loading is in the range of 3 to 15 mmoles per gram of silica carrier; if a silica carrier is overloaded with MAO, the catalyst activity is lower and the catalyst particles agglomerate with attendant problems of transferring the catalyst.

The amount of metallocene on the carrier ranges, on a transition metal elemental basis, from 0.001 to 10 weight percent, preferably from 0.05 to 1.0, and most preferably from 0.05 to 0.5 weight percent. Accordingly the ratio of Al:Zr (on an elemental basis) in the catalyst can range from 25 to 10,000, usually within the range of from 50 to 1000 but preferably from about 75 to 350, and most preferably from 100 to 200.

To form catalysts of the invention, all catalyst components can be dissolved with alumoxane and impregnated into the carrier. Catalyst preparation is undertaken under anhydrous conditions and in the absence of oxygen. In a unique process, the carrier material is impregnated with alumoxane, preferably methylalumoxane, in a process described below. The class of alumoxanes comprises oligomeric linear and/or cyclic alkylalumoxanes represented by the formula:

R-(Al(R)-O)ₙ-AlR₂

for oligomeric, linear alumoxanes;
and

(-Al(R)-O-)ₘ

for oligomeric cyclic alumoxane,
wherein n is 1-40, preferably 10-20, m is 3-40, preferably 3-20 and R is a C₁-C₈ alkyl group and preferably methyl. MAO is a mixture of oligomers with a very wide distribution of molecular weights and usually with an average molecular weight of about 1200. MAO is typically kept in solution in toluene.

The volume of the solution comprising an alumoxane and a solvent therefor can vary, depending on the catalyst sought to be produced. In a preferred embodiment of alumoxane incorporation into the carrier, one of the controlling factors in the alumoxane incorporation into the carrier material catalyst synthesis is the pore volume of the silica. In this preferred embodiment, the process of impregnating the carrier material is by infusion of the alumoxane solution, without forming a slurry of the carrier material, such as silica, in the alumoxane solution. This is undertaken with agitation.

The volume of the solution of the alumoxane is sufficient to fill the pores of the carrier material without forming a slurry in which the volume of the solution exceeds the pore volume of the silica; accordingly and preferably, the maximum volume of the alumoxane solution is equal to, but does not exceed, the total pore volume of the carrier material sample. That maximum volume of the alumoxane solution ensures that no slurry of silica in solvent is formed in this step. By way of example, if the pore volume of the carrier material is 1.65 cc/gm, then the volume of alumoxane will be equal to or less than 1.65 cc/gm of carrier material. Thus, the maximum volume of solution (of metallocene and alumoxane) will equal the total pore volume of the carrier, e.g. silica, which is the pore volume in, e.g., cc/gm, times the total weight of the carrier used. As a result of this provision, the impregnated carrier material will appear dry immediatedly following impregnation although the pores of the carrier may be filled with inter alia solvent. The preferred solvent for the aluminoxane, e.g. methyluminoxane, is toluene. The advantage is that the impregnation is undertaken in a single solvent system.

Solvent may be removed from the alumoxane impregnated pores of the carrier material by heating and/or under a vacuum or purged with heating in an inert gas, such as nitrogen. If elevated temperature is employed, the temperature conditions in this step are controlled to reduce, if not to eliminate, agglomeration of impregnated carrier particles and/or crosslinking of the alumoxane. In this step, solvent can be removed by evaporation effected at relatively low elevated temperatures of above about 40°C and below about 60°C to obviate agglomeration of catalyst particles and crosslinking of the alumoxane.

Preferably drying is undertaken at 45°C or less for 5 to 7 hours. Although solvent can be removed by evaporation at relatively higher temperatures than that defined by the range above 40°C and below about 60°C, very short heating times schedules must be employed to obviate agglomeration of catalyst particles and crosslinking of the alumoxane, with reduction of catalyst activity. Accordingly, an active catalyst has been produced at evaporation temperature of 110°C (in less than 10 seconds), whereas at 45°C, drying can be undertaken for periods of 24 hours.

In a preferred embodiment, the metallocene is added to the solution of the alumoxane prior to impregnating the carrier with the solution. Again the maximum volume of the alumoxane solution also containing the metallocene is the total pore volume of the carrier material sample. The mole ratio of aluminum provided by aluminoxane, expressed as Al, to metallocene metal expressed as M (e.g. Zr), ranges from 50 to 500, preferably 75 to 300, and most preferably 100 to 200. An added advantage of the present invention is that this Al:Zr ratio can be directly controlled. In a preferred embodiment the alumoxane and metallocene compound are mixed together at ambient temperature for 0.1 to 6.0 hours, prior to use in the infusion step. The solvent for the metallocene and alumoxane can be appropriate solvents, such as aromatic hydrocarbons, halogenated aromatic hydrocarbons, ethers, cyclic ethers or esters; preferably it is toluene.

The metallocene compound has the formula CpₘMAₙBₚ in which Cp is an unsubstituted or substituted cyclopentadienyl group, M is zirconium or hafnium and A and B belong to the group including a halogen atom, hydrogen or an alkyl group. In the above formula of the metallocene compound, the preferred transition metal atom M is zirconium. In the above formula of the metallocene compound, the Cp group is an unsubstituted, a mono- or a - polysubstituted cyclopentadienyl group. The substituents on the cyclopentadienyl group can be preferably straight-or branched chain C₁-C₆ alkyl groups. The cyclopentadienyl group can be also a part of a bicyclic or a tricyclic moiety such as indenyl, tetrahydroindenyl, fluorenyl or a partially hydrogenated fluorenyl group, as well as a part of a substituted bicyclic or tricyclic moiety. In the case when m in the above formula of the metallocene compound is equal to 2, the cyclopentadienyl groups can be also bridged by polymethylene or dialkylsilane groups, such as -CH₂-,-CH₂-CH₂-, -CR'R"- and -CR'R"-CR'R"- where R' and R" are short alkyl groups or hydrogen, -Si(CH₃)₂-, Si(CH₃)₂-CH₂-CH₂-Si(CH₃)₂- and similar bridge groups. If the A and B substituents in the above formula of the metallocene compound are halogen atoms, they belong to the group of fluorine, chlorine, bromine or iodine. If the substituents A and B in the above formula of the metallocene compound are alkyl groups, they are preferably straight-chain or branched C₁-C₈ alkyl groups, such as methyl, ethyl, n-propyl, isopropyl, n-butyl, isobutyl, n-pentyl, n-hexyl or n-octyl.

Suitable metallocene compounds include bis(n-butylcyclopentadienyl)metal dihalides, bis(n-butyfcyclopentadienyl)metal hydridohalides, bis(n-butylcyclopentadienyl)metal monoalkyl monohalides, bis(n-butyl-cyclopentadienyl) metal dialkyls and bis(indenyl)metal dihalides wherein the metal is zirconium or hafnium, halide groups are preferably chlorine and the alkyl groups are C₁-C₆ alkyls. Illustrative, but nonlimiting examples of metallocenes include bis(n-butylcyclopentadienyl)zirconium dichloride, bis(n-butylcyclopentadienyl)hafnium dichloride, bis(n-butylcyclopentadienyl)zirconium dimethyl, bis(n-butylcyclopentadienyl)hafnium dimethyl, bis(n-butylcyclopentadienyl)zirconium hydridochloride, bis(n-butylcyclopentadienyl)hafnium hydridochloride, bis(1,3 dimethylcyclopentadienyl)zirconium dichloride, bis (pentamethylcyclopentadienyl)zirconium dichloride, bis(pentamethylcyclopentadienyl)hafnium dichloride, bis (iso-butylcyclopentadienyl)zirconium dichloride, cyclopentadienyl-zirconium trichloride, bis(indenyl)zirconium dichloride, bis(4,5,6,7-tetrahydro-1-indenyl)zirconium dichloride, and ethylene-[bis(4,5,6,7-tetrahydro-1-indenyl)] zirconium dichloride. The metallocene compounds utilized within the embodiment of this art can be used as crystalline solids, as solutions in aromatic hydrocarbons or in a supported form.

The carrier material is a solid, particulate, porous, preferably inorganic material, such as an oxide of silicon and/or of aluminum. In the most preferred embodiment, the carrier is silica in the form of spherical particles, e.g., as obtained by a spray-drying process. The carrier material is used in the form of a dry powder having an average particle size of from about 1 µm (micron) to about 500 µm (microns), preferably from from about 1 µm (micron) to about 250 µm (microns), and most preferably about 10 µm (microns) to about 150 µm (microns) particle size. If necessary, the final catalyst containing carrier material may be sieved to insure elimination of large catalyst particles. Presently, elimination of catalyst particles that have a particle size of greater than 500 µm (microns) is envisaged; preferably, elimination of particles of greater than 250 µm (micron) particle size, and, most preferably, elimination of particles of greater than 150 µm (micron) particle size is undertaken. Sieving of the material is preferably undertaken after impregnation of the carrier with the metallocene and the aluminoxane. This is highly desirable in the embodiment of the invention, in which the catalyst contains only one transition metal in the form of a metallocene and which is used to form narrow molecular weight LLDPE, to reduce and/or to eliminate gels in the final polyolefin product and to eliminate reactor hot spots.

The surface area of the carrier is at least about 3 m²/g, preferably, 5 to 1200 m²/g and most preferably at least about 50 m²/g up to about 350 m²/g. The pore volume of the carrier will range from 0.1 to 5 cm³/g, preferably from 0.1 to 3.5 cm³/g. The carrier material should be dry, that is, free of absorbed water.

Preferably, the carrier is silica, which contains [OH] groups. The hydroxyl group of the silica can range from greater than 0 to 2.5 mmoles/gram silica, but preferably, as will become apparent below, ranges from 0.5 to 2.5 mmoles per gram. This range is favored by lower drying, dehydration and/or calcination temperatures.

The silica hydroxyl (herein silanol and silica hydroxyl are used interchangeably) groups are detectable by IR spectroscopy. Quantitative determinations of the hydroxyl concentration on silica are made by contacting a silica sample with methyl magnesium iodide and measuring methane evolution (by pressure determination).

Dehydration of silica material can be effected by heating at about 100°C to about 600°C, preferably from about 150°C to about 300°C and most preferably at about 250°C.

Silica dehydrated at 600°C (for about 16 hours) will have a surface hydroxyl concentration of about 0.7 mmoles per gram (mmols/gm) of silica. Silica dehydrated at 800°C will be a silica with 0.5 mmole of silica hydroxy per gram silica. The silica of the most preferred embodiment is a high surface area, amorphous silica (surface area = 300 m²/g; pore volume of 1.65 cm³/g), and it is a material marketed under the tradenames of Davison 952 or Davison 955 by the Davison Chemical Division of W. R. Grace and Company. As purchased, the silicas are not dehydrated and must be dehydrated prior to use.

The effect of silica hydroxyl groups on the catalyst activity and productivity is reflected in the EXAMPLES below. The synthesis of the catalyst of the invention exhibiting highest activity dictates that the silica contain hydroxyl groups for contact with the solution containing aluminoxane and metallocene, described below. It was determined that reaction of the hydroxyl groups of the silica with scavengers, such as trialkylaluminum compounds, e.g., trimethylaluminum (TMA), reduced the activity of the catalyst produced thereby compared to a catalyst formed with a silica having hydroxyl groups unreacted with such a scavenger. Silicas containing higher hydroxyl numbers produce catalysts of higher activity than silicas of lower hydroxyl numbers; it can be shown that treating the silica with trimethylaluminum to react with the silanol or silica hydroxy groups [which, with appropriate molar amount of TMA the hydroxyl concentration is reduced to 0 (zero), as indicated by IR] prior to catalyst synthesis produced a catalyst with a productivity of about 200 kg(polymer)/g transition metal. However, this activity is good activity, and the catalyst exhibiting such activity is useful in the processes herein. By comparison, catalysts with a hydroxyl group content of 1.8 mmole/gram silica exhibits a productivity of about 1000 kg(polymer)/g transition metal. The amount of hydroxyl groups, in mmoles/gram silica can be affected by the dehydration temperatures used to condition the silica. Specifically, the dehydration temperatures of about 600°C reduce the amount of reactive hydroxyl groups available for contact with the solution of aluminoxane and metallocene. By comparison, the dehydration temperatures of about 250°C increase the amount of reactive hydroxyl groups available for contact with the solution of aluminoxane and metallocene, relative to the silica heat treated, for dehydration purposes, to 600° C. Thus it has been found that the catalyst made with the silica subjected to dehydration temperatures of 250°C is more active than a catalyst produced with the silica subjected to drying temperatures of 600°C. Accordingly, preferred dehydration and/or calcination temperatures are below 300°C and preferably at about 250°C.

Accordingly, the silica used in embodiments of the invention will contain a silanol (OH) concentration of greater than 0.7 mmoles OH per gram silica; preferably it will contain greater than 0.7 mmoles up to 2.5 mmoles OH per gram of silica. In preferred embodiments, the concentration ranges from 1.6 to 1.9 mmoles/gram silica.

### The polymerization and copolymerization products

Low density (0.91 to 0.939 g/cc) products with high bulk density, low (hexane) extractables and granular morphology can be prepared in the slurry reactor with no fouling. The resin produced has a high molecular weight, narrow molecular weight distribution, and homogeneous branching distribution. The catalyst ash contains small amounts of Zr and Al (from the catalyst), e.g., less than 1 ppm Zr and 40 ppm Al (from catalyst). The high activity of the catalysts of the invention which also exhibit long catalyst life and produce high bulk density products are significant factors in the unexpected efficiency of these catalysts in catalytic polymerizations and copolymerizations of olefins.

More particularly, the copolymer products contain 0.1 to 2 ppm of Zr. The product has an average particle size of 0.015-0.035 inches (0.38 to 0.89 cm), and a settled bulk density from 15 to 36 lb/ft³ (240 to 580 kg/m³). The particles of product are free flowing. The narrow molecular weight distribution low density copolymers have been produced with MI of one (1) and less than 1, down to 0.01. The low density products of the invention exhibit a MI which can range from 0.01 to 5, preferably from 0.5 to 4, and most preferably 0.8 to 2.0.

Accordingly, products within the slurry reactor are characterized by MI of less than 10, preferably less than 5 and most preferably less than 3. The low density products of the invention exhibit a melt flow ratio (MFR) of less than 30, generally 15 to 25, preferably from 16 to 22; products with MFR ranging from 16 to 22 have been made; MFR is the ratio I₂₁/I₂ [wherein I₂₁ is measured at 190°C in accordance with ASTM D-1238, Condition F, and I₂ is measured in accordance with ASTM D-1238, Condition E]. Differential Scanning calorimeter data suggest that the polymerization product exhibits very low heat seal temperatures. When fabricated into films, the films of the copolymers exhibit balanced tear strength, as measured by ASTM D-1922. Furthermore the LLDPE of the invention exhibits Dart Drop Impact values as measured by ASTM D-1709 of greater than 800. The products of the catalysis with the catalyst of the invention are substantially free of gels. The films exhibit low haze values as measured by ASTM D-1003.

### EXAMPLES

### Catalyst Preparation:

### Example 1: No TMA on 988 Silica

5g of PQ 988 silica, dehydrated at 600°C, was treated with 11.2 cc of a solution of (n-butylCp).2ZrCl₂ and MAO in toluene. Gas evolution was observed. The Schering MAO solution was 13.2 wt% Al. The Al/Zr ratio was 200: 1. The catalyst was dried under flowing N₂ at 38-42°C for 2 hours. The catalyst was designated 1 A and contained 14.3 wt% Al and 0.18 wt% Zr.

### Example 2: 0.75 mmol TMA/g on 988 Silica

5 g of PQ 988 silica, dehydrated at 600°C, was slurried in 25 ml of heptane and treated with 2.9 ml of TMA solution (14 wt% in heptane), equivalent to 0.75 mmol TMA/g silica. Gas evolution was observed during TMA treatment. The slurry was dried at 80-90°C till free-flowing powder was obtained. The TMA-treated silica was treated with 11.1 ml of the MAO/Zr solution described in Example 1. At this point no gas evolution was observed. The catalyst was dried under flowing N₂ at 42-44°C for 2 hours and was designated 2B. It contained 11.9 wt% Al and 0.13 wt% Zr.

### Example 3: 1.5 mmol TMA/α on 988 Silica

5 g of PQ 988 silica, dehydrated at 600°C, was slurried in 25 ml of heptane and treated with 6 ml of TMA solution (14 wt% in heptane), equivalent to 1.5 mmol TMA/g silica. Gas evolution was observed during TMA treatment. The slurry was dried at 80-90°C till free-flowing powder was obtained. The TMA-treated silica was treated with 11.1 ml of the MAO/Zr solution described in Example 1. At this point no gas evolution was observed. The catalyst was dried under flowing N₂ at 42-44°C for 2 hours, and designated 3A. It contained 11.1 wt% Al and 0.12 wt% Zr.

### Examples 4-6:

Catalysts corresponding to the three examples above were made using Davison 955-600 silica as the support. They were designated 4, 5, and 6. They contained 15.0, 14.6 and 14.5 wt% Al, respectively, and 0.18, 0.18 and 0.17 wt% Zr, respectively.

### Slurry Polymerizations for LLDPE -

The following Examples are for reference purposes only, and do not fall within the scope of the present invention.

### Example 7

The polymerization was conducted in a 2 liter slurry reactor at 70°C with 1 liter of polymerization grade heptane. Hexene-1 (100 cc) and tri-isobutyl aluminum (TIBA=, 2cc of 25 wt% in heptane) were added to the reactor. At reaction temperature, ethylene (120 psi [0.83 MPa]) was added to saturate the liquids. About 80 mg of the catalyst from Example 1 was added to the reactor and the polymerization was run for 1 hour. A granular product was obtained in 83 g yield with I₂ of 1.00, MFR of 17.4, density of 0.914 g/cc and productivity of 959 gPE/gcat/hr/100 psi C2. The product was easily removed from the reactor and showed little if any signs of fouling the reactor.

### Examples 8-12

Table 1 illustrates similar polymerization results with the catalysts of Examples 1-6. Conditions were as stated for Example 7.

**Table 1**

| | 988-600 | | | | | 955-600 | | | | |
|---|---|---|---|---|---|---|---|---|---|---|
| TMA | EX | CAT | I2 | MFR | Pro | EX | CAT | I2 | MFR | éProd |
| 0 | 7 | 1 | .93 | 19 | 970 | 10 | 4 | .80 | 22 | 825 |
| .75 | 8 | 2 | .07 | 18 | 200 | 11 | 5 | .24 | 21 | 650 |
| 1.5 | 9 | 3 | .06 | -- | 260 | 12 | 6 | .32 | 20 | 550 |
| Productivity is in g PE/g cat/hr/100 psi C2=. Densities were 0.914-.918 g/cc. | | | | | | | | | | |

### Slurry LLDPE Morphology

The non-fouling operation of laboratory slurry reactors is associated with the formation of granular PE product. Two basic types of particle morphology can be formed in the reactor. A solid, transparent, spheroidal particle makes up the majority of the product in the no-TMA pre-treatment cases (Catalysts from Ex. 1 and 4), with small amounts of a white amorphous-looking polymer binding some particles together. As the reactor fouling increases with the TMA pre-treated catalysts, the relative amounts of the white, rubbery phase increases.

PQ 988 silica under the conditions listed above produced less of the white polymeric binder than the Davison 955 silica, and is preferred for production of non-fouling granular LLDPE. However, acceptable catalysts can be made with the 955 silica, as shown by the following example.

### Example 13

A catalyst similar to those of Example 1 was prepared on 955-600 silica. No TMA was used to pretreat the silica. The Al/Zr ratio was 200:1. The MAO loading was 7 mmol Al/g silica and the Zr was 0.035 mmol/g silica. The MAO in this case was obtained from Ethyl Corporation, and had somewhat less free TMA than the Schering MAO used above. When under the polymerization conditions of Example 7, 128 g of a granular polymer with MI of 1.4, MFR of 20, productivity of 1100 g/g cat/hr/100 psi C2, and density of 0.916 was obtained.

### Example 14 Supported metallocene catalyst on silica treated at different dehydration temperature

Four catalysts were prepared in the same manner and using the same formulation as example 13, except silicas with dehydration temperatures of 20°C (with vacuum), 110°C, and 300°C were used respectively for each. These catalysts were tested in a slurry reactor using procedures similar to Example 7. Results are listed in Table 2.

**Table 2**

| Cat | Silica Dehydration Temperature | Productivity | | MI | MFR |
|---|---|---|---|---|---|
| | | g/g/hr | Density | | |
| 14A | 20 | 2300 | 0.914 | 18.7 | |
| 14B | 110 | 2700 | 0.914 | 1.16 | 19.1 |
| 14C | 300 | 2500 | 0.914 | 1.19 | 18.2 |
| 14D | 600 | 1300 | 0.911 | 0.72 | 18.9 |
| In all cases, the resin morphology was excellent with no reactor fouling. | | | | | |

### Example 15

The following examples illustrate that other metallocene compounds can also be used to prepare the catalyst, but the catalyst productivity and the resin density, FI and MFR are different. Catalysts were prepared similar to Example 13 except different metallocene complexes were used. The silica dehydration temperature and the polymerization results are noted in Table 3:

**Table 3**

| Cat | Metallocene | Silica Dehydration Temperature | Productivity | | FI | MFR |
|---|---|---|---|---|---|---|
| | | | g/g/hr | Density | | |
| 15A | Cp*Zr | 600 | 150 | 0.938 | 2.0 | -- |
| 15B | IndZr | 600 | 1500 | 0.911 | 5.5 | 20 |
| 15C | Cp Zr | 600 | 200 | 0.926 | 4.5 | 42 |
| 15D | MeCpZr | 600 | 500 | 0.915 | 0.8 | -- |
| 15E | Cp*Zr | 200 | 300 | 0.928 | 1.8 | 28 |
| 15F | IndZr | 200 | 1700 | 0.911 | 6.5 | 19 |
| 15G | CpZr | 200 | 100 | 0.939 | 0.6 | -- |
| 15H | MeCpZr | 200 | 600 | 0.915 | 0.4 | -- |
| 15I | CpTi | 250 | productivity too low | | | |
| 15J | Cp*Ti | 250 | productivity too low | | | |
| Cp*Zr= bis (pentamethylcyclopentadienyl) zirconium dichloride | | | | | | |
| IndZr= bis (indenyl) zirconium dichloride | | | | | | |
| CpZr= bis (cyclopentadienyl) zirconium dichloride | | | | | | |
| MeCpZr= bis (methylcyclopentadienyl) zirconium dichloride | | | | | | |
| CpTi= bis (cyclopentadienyl) titanium dichloride | | | | | | |
| CpZr= bis (pentamethylcyclopentadienyl) titanium dichloride | | | | | | |

In all cases, the resin morphology was excellent with no reactor fouling.

### Example 16

The following examples illustrate the high bulk density of the granular products, the average particle size, and the resulting high yield per unit reactor or solvent volume. Very high catalyst efficiency both in terms of the use of metallocene complex and in the use of methylalumoxane are demonstrated in the following examples also.

Catalysts were prepared using the standard method as described in Example 13. The silica dehydration temperature, the MAO loading, the metallocene loading, and the drying time were varied to show the ranges of these variables.

Polymerization is done in a semi-batch reactor at 70°C and 125 psig (0.96 MPa) pressure. The reactor volume is 2.5 liter. One liter of heptane and 100 cc of hexene are measured into the reactor. Ethylene at 125 psig (0.96 MPa) pressure is introduced into the reactor before a small catalyst sample is injected into the reactor. Tables 4 and 5 show the results.

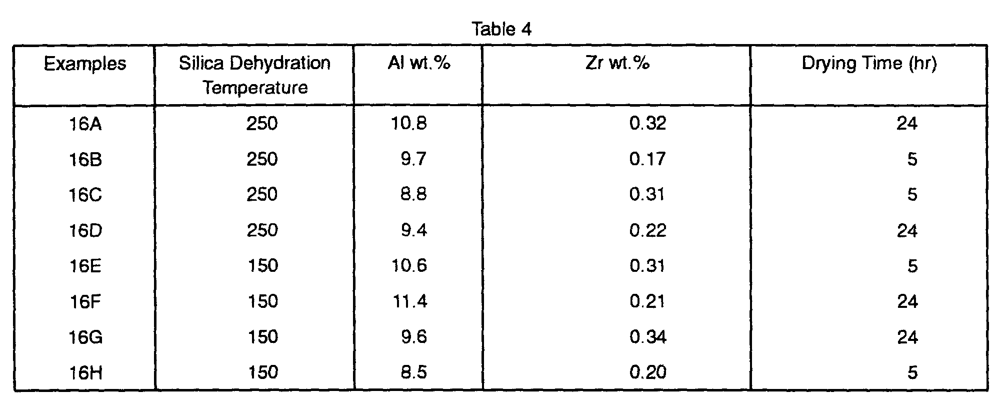

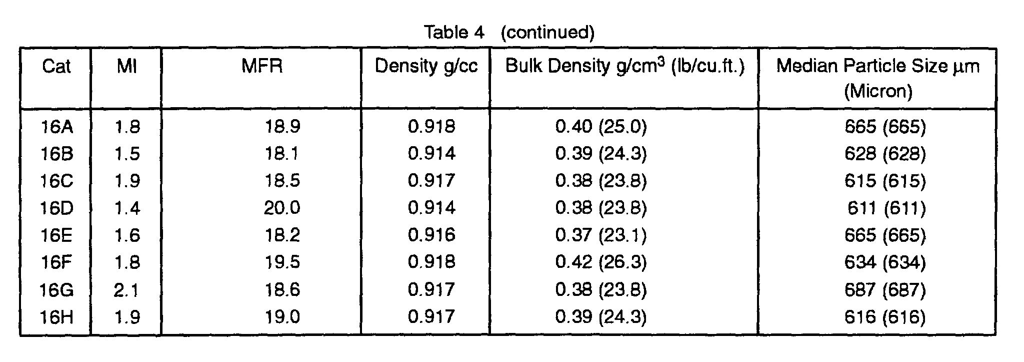

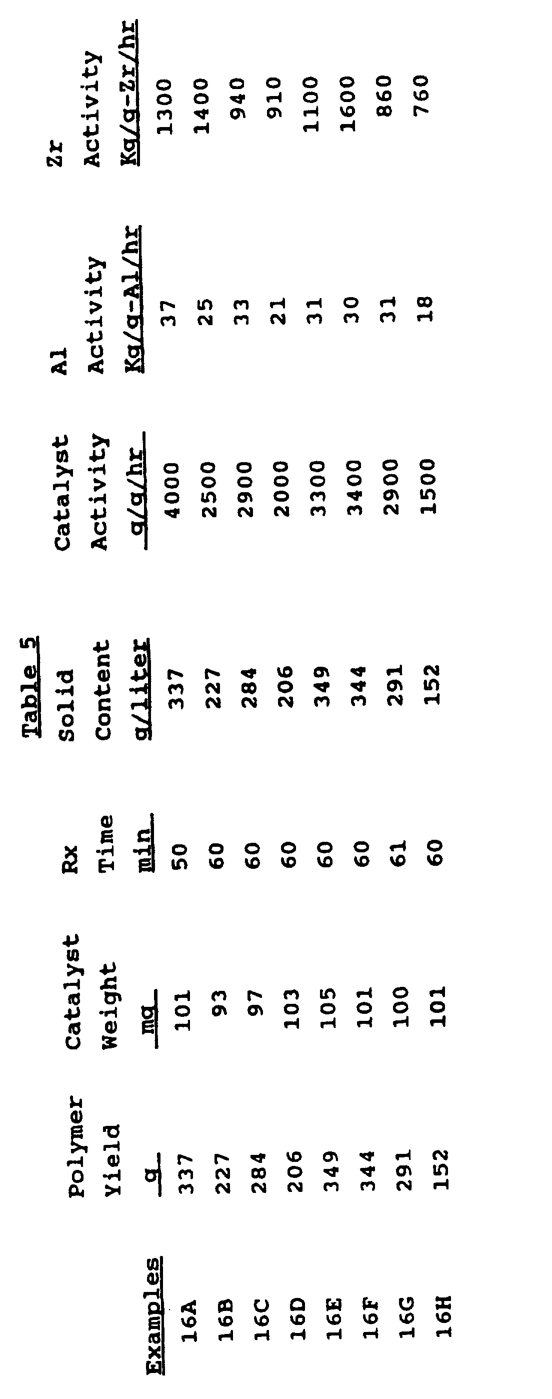

## Claims

1. A process for preparing linear low density polyethylene (LLDPE) in granular form, having a specific density in the range 0.91 to 0.939 g/cc and an average particle size of 300 to 800µm, the process comprising:
(a) dispersing a catalyst in an aliphatic solvent, under anhydrous conditions, to form a slurry in a reaction vessel, the catalyst comprising supported on a dehydrated carrier, a metallocene and an alumoxane;
(b) maintaining the slurry at an absolute pressure below 1000 psi (6.9 MPa) and a temperature of 20°C to 100°C;
(c) introducing into the reaction vessel, ethylene and an alpha-olefin selected from 1-butene, 1-propene and alpha-olefins having 6 to 10 carbon atoms, wherein the partial pressure of ethylene ranges from 20 to 1000 psi (0.14 to 6.9 MPa); and
(d) recovering from the reaction vessel granular LLDPE exhibiting a bulk density of 15 to 36 Ib./ft³ (240 to 580 kg/m³) and an MFR of less than about 30, wherein the aliphatic solvent is selected from the group consisting of isobutane, pentane, isomers of pentane, hexane, isomers of hexane, octane, isomers of octane, decane, dodecane and mixtures thereof.

2. A process according to claim 1, wherein the specific density of the LLPDE is less than 0.93 g/cc.

3. A process according to claim 1, wherein the carrier comprises silica, which is amorphous and porous and has a pore volume of 0.1 to 5 cc/gm, and which has a concentration of silanol groups less than 2.5 mmole per gram of silica.

4. A process according to claim 3, wherein the catalyst is prepared by contacting, under anhydrous conditions, the silica carrier with a volume of mixture comprising a metallocene and an alumoxane, the volume of the mixture being no greater than the total pore volume of the silica carrier.

5. A process according to claim 4, wherein the metallocene has the formula, CpₘMAₙBₚ, wherein Cp is a substituted cyclopentadienyl group, m is 1 or 2; M is zirconium or hafnium; each of A and B is selected from the group consisting of a halogen atom, a hydrogen atom and an alkyl group; and m+n+p is equal to the valence of the metal M; and wherein the alumoxane has the formula (a) or (b) as follows:
(a) R-(Al(R)-O)ₙ-AlR₂
for oligomeric, linear alumoxanes;
(b) (-Al(R)-O-)ₘ
for oilgomeric cyclic alumoxanes;
wherein n is 1-40, m is 3-40, and R comprises a C₁-C₈ alkyl group;
and wherein the silica is an activated catalyst.

6. A process according to any preceding claim, wherein the catalyst is in the form of particles having a particle size in the range of 1 to 500 µm.

7. A process according to claim 1, wherein the ratio of aluminum to transition metal in the catalyst is from 70 to 350.

8. A process according to claim 1, wherein the amount of transition metal in the catalyst (on an elemental basis) ranges from 0.001 to 10 weight percent and the amount of aluminum in the catalyst (on an elemental basis) ranges from 1 to 40 weight percent; and wherein the Al:transition metal ratio in the catalyst (on an elemental basis) ranges from 25 to 10000.

9. A process according to any preceding claim, wherein the metallocene is selected from the group consisting of bis (n-butylcyclopentadienyl) metal dihalides, bis(n-butylcyclopentadienyl) metal hydridohalides, bis(n-butylcyclopentadienyl) metal monoalkyl monohalides, bis(n-butylcyclopentadienyl) metal dialkyls, bis(tetrahydro-indenyl) metal halides and bis(indenyl) metal dihalides.

10. A process according to claim 9, wherein the metallocene is selected from the group consisting of bis(iso-butylcyclopentadienyl) zirconium dichloride, bis(pentamethylcyclopentadienyl) zirconium dichloride, bis(tetrahydroindenyl) zirconium dichloride, bis(indenyl) zirconium dichloride, bis(1,3-dimethylcyclopentadienyl) zirconium dichloride, bis(methylcyclopentadienyl)zirconium dichloride, and bis(n-butylcyclopentadienyl) zirconium dichloride.

11. A process according to claim 1, wherein the concentration of alpha olefin in the solvent is in the range 0.1 to 50 weight percent.

12. A process according to claim 11, wherein the concentration of alpha olefin in the solvent is in the range 0.1 to 30 weight percent.

13. A process according to claim 1, wherein the boiling point of the solvent is less than 180°C.

14. A process according to claim 1, wherein the pressure in step (b) is below 600 psi (4.1 MPa).

## Patentansprüche

1. Verfahren zur Herstellung eines linearen Polyethylens mit niedriger Dichte (LLDPE) in granulärer Form mit einer spezifischen Dichte im Bereich von 0,91 bis 0,939 g/cm³ und einer mittleren Partikelgröße von 300 bis 800 µm, wobei das Verfahren das:
(a) Dispergieren eines Katalysators in einem aliphatischen Lösungsmittel unter wasserfreien Bedingungen, um eine Aufschlämmung in einem Reaktionsgefäß zu bilden, wobei der Katalysator, getragen von einem dehydrierten Träger, ein Metallocen und ein Alumoxan umfaßt;
(b) Halten der Aufschlämmung bei einem absoluten Druck unter 1000 psi (6,9 MPa) und einer Temperatur von 20 °C bis 100 °C;
(c) Einführen von Ethylen und einem alpha-Olefin, das aus 1-Buten, 1-Propen und alpha-Olefinen mit 6 bis 10 Kohlenstoffatomen ausgewählt wurde, in das Reaktionsgefäß, wobei der Partialdruck des Ethylens zwischen 20 und 1000 psi (0,14 bis 6,9 MPa) liegt; und
(d) Gewinnung von granulärem LLDPE, das eine Schüttdichte von 15 bis 36 1b./ft³ (240 bis 580 kg/m³) und ein MFR von weniger als etwa 30 zeigt, aus dem Reaktionsgefäß, wobei das aliphatische Lösungsmittel aus der Gruppe ausgewählt wird, die aus Isobutan, Pentan, Isomeren von Pentan, Hexan, Isomeren von Hexas, Octan, Isomeren von Octan, Decan, Dodecan und Gemischen davon besteht;
umfaßt.

2. Verfahren gemäß Anspruch 1, **dadurch gekennzeichnet, daß** die spezifische Dichte des LLDPE weniger als 0,93 g/cm³ ist.

3. Verfahren gemäß Anspruch 1, **dadurch gekennzeichnet, daß** der Träger Siliciumdioxid umfaßt, das amorph und porös ist und ein Porenvolumen von 0,1 bis 5 cm³/g hat und das eine geringere Konzentration an Silanolgruppen als 2,5 mmol pro Gramm Siliciumdioxid besitzt.

4. Verfahren gemäß Anspruch 3, **dadurch gekennzeichnet, daß** der Katalysator durch Kontaktieren unter wasserfreien Bedingungen des Siliciumdioxidträgers mit einem Volumen eines Gemisches, das ein Metallocen und Alumoxan umfaßt, wobei das Volumen des Gemisches nicht größer als das Gesamtporenvolumen des Siliciumdioxidträgers ist, hergestellt wird.

5. Verfahren gemäß Anspruch 4, **dadurch gekennzeichnet, daß** das Metallocen die Formel CpₘMAₙBₚ besitzt, worin Cp eine substituierte Cyclopentadienyl-Gruppe, m 1 oder 2; M Zirkonium oder Hafnium ist; jeweils A und B aus der Gruppe ausgewählt werden, die aus einem Halogenatom, einem Wasserstoffatom und einer Alkylgruppe besteht; und m+n+p gleich der Wertigkeit des Metalls M ist und daß das Alumoxan die folgende Formel (a) oder (b):
(a) R-(Al(R)-O)ₙ-AlR₂ für oligomere lineare Alumoxane;
(b) (-Al(R)-O-)ₘ für oligomere cyclische Alumoxane besitzt; worin n 1 bis 40, m 3 bis 40 ist und R eine C₁-C₈-Alkylgruppe umfaßt;
und daß das Siliciumdioxid ein aktivierter Katalysator ist

6. Verfahren gemäß jedem vorstehenden Anspruch, **dadurch gekennzeichnet, daß** der Katalysator in Partikelform mit einer Partikelgröße im Bereich von 1 bis 500 µm vorliegt.

7. Verfahren gemäß Anspruch 1, **dadurch gekennzeichnet, daß** das Verhältnis von Aluminium zu dem Übergangsmetall in dem Katalysator 70 bis 350 ist.

8. Verfahren gemäß Anspruch 1, **dadurch gekennzeichnet, daß** die Menge des Übergangsmetalls in dem Katalysator (auf Elementarbasis) zwischen 0,001 und 10 Gewichtsprozent liegt und die Menge des Aluminiums in dem Katalysator (auf Elementarbasis) zwischen 1 und 40 Gewichtsprozent liegt und daß das Al : Übergangsmetall-Verhältnis in dem Katalysator (auf Elementarbasis) zwischen 25 und 10.000 liegt.

9. Verfahren gemäß jedem vorstehenden Anspruch, **dadurch gekennzeichnet, daß** das Metallocen aus der Gruppe ausgewählt wird, die aus Bis(n-butylcyclopentadienyl)metalldihalogeniden, Bis(n-butylcyclopentadienyl)-metallhydridohalogeniden, Bis(n-butylcyclopentadienyl)metallmonoalkylmonohalogeniden; Bis(n-butylcyclopentadienyl)metalldialkylen; Bis(tetrahydroindenyl)-metallhalogeniden und Bis(indenyl)metalldihalogeniden besteht.

10. Verfahren gemäß Anspruch 9, **dadurch gekennzeichnet, daß** das Metallocen aus der Gruppe ausgewählt wird, die aus Bis(iso-butylcyclopentadienyl)-zirkoniumdichlorid, Bis(pentamethylcyclopentadienyl)zirkoniumdichlorid, Bis(tetrahydroindenyl)zirkoniumdichlorid, Bis(indenyl)zirkoniumdichlorid, Bis(1,3-dimethylcyclopentadienyl)zirkoniumdichlorid, Bis(methylcyclopentadienyl)-zirkoniumdichlorid und Bis(n-butylcyclopentadienyl)zirkoniumdichlorid besteht.

11. Verfahren gemäß Anspruch 1, **dadurch gekennzeichnet, daß** die Konzentration des alpha-Olefins in dem Lösungsmittel im Bereich von 0,1 bis 50 Gewichtsprozent liegt.

12. Verfahren gemäß Anspruch 11, **dadurch gekennzeichnet, daß** die Konzentration des alpha-Olefins in dem Lösungsmittel im Bereich von 0,1 bis 30 Gewichtsprozent liegt.

13. Verfahren gemäß Anspruch 1, **dadurch gekennzeichnet, daß** der Siedepunkt des Lösungsmittels weniger als 180 °C beträgt.

14. Verfahren gemäß Anspruch 1, **dadurch gekennzeichnet, daß** der Druck im Schritt (b) unter 600 psi (4,1 MPa) ist.

## Revendications

1. Un procédé de préparation de polyéthylène linéaire basse densité (LLDPE) sous forme granulaire, ayant une masse spécifique comprise entre 0,91 et 0,939 g/cm³ et une taille moyenne de particules de 300 à 800 µm, le procédé comprenant :
(a) la dispersion d'un catalyseur dans un solvant aliphatique, dans des conditions anhydres, pour former une suspension dans un réacteur, le catalyseur comprenant, fixés sur un support déshydraté, du métallocène et un alumoxane;
(b) le maintien de la suspension sous une pression absolue inférieure à 6,9 MPa (1000 psi) et à une température comprise entre 20° C et 100° C;
(c) l'introduction, dans le réacteur, de l'éthylène et d'une α-oléfine choisie parmi le 1-butène, le 1-propène et des α-oléfines ayant de 6 à 10 atomes de carbone, la pression partielle de l'éthylène étant comprise entre 0,14 et 6,9 MPa (20 et 1000 psi); et,
(d) la récupération, du réacteur, du polyéthylène granulaire linéaire basse densité, présentant une masse volumique apparente de 240 à 580 kg/m³ (15 à 36 livres/pied³) et un indice de fluidité inférieur à environ 30, dans lequel le solvant aliphatique est choisi dans le groupe consistant en isobutane, pentane, isomères du pentane, hexane, isomères de l'hexane, octane, isomères de l'octane, décane, dodécane et leurs mélanges

2. Un procédé selon la revendication 1, dans lequel la masse spécifique du polyéthylène linéaire basse densité est inférieure à 0,93 g/cm³.

3. Un procédé selon la revendication 1, dans lequel le support comprend de la silice, amorphe et poreuse et dont le volume de pore est de 0,1 à 5 cm³/g, et dont la concentration en groupes silanol est inférieure à 2,5 mmole par gramme de silice.

4. Un procédé selon la revendication 3, dans lequel le catalyseur est préparé par la mise en contact, dans des conditions anhydres, du support silice avec un volume de mélange comprenant un métallocène et un alumoxane, le volume du mélange n'étant pas supérieur au volume total de pore du support silice.

5. Un procédé selon la revendication 4, dans lequel le métallocène a la formule CpₘMAₙBₚ, dans laquelle Cp est un groupe cyclopentadiényle substitué, m est 1 ou 2; M est le zirconium ou le hafnium; chacun de A et B est choisi parmi le groupe constitué d'un atome d'halogène, d'un atome d'hydrogène et d'un groupe alkyle; et m+n+p est égal à la valence du métal M; et dans lequel l'alumoxane a la formule (a) ou (b) comme suit:
(a) R-(Al(R)-O)ₙ-AlR₂ pour les alumoxanes oligomères linéaires;
(b) (-Al(R)-O-)ₘ pour les alumoxanes oligomères cycliques;
dans lesquelles n est compris entre 1 et 40, m est compris entre 3 et 40, et R comprend un groupe alkyle en C₁ à C₈;
et dans lequel la silice est un catalyseur activé.

6. Un procédé selon l'une quelconque des revendications précédentes, dans lequel le catalyseur est sous forme de particules ayant une taille de particule comprise entre 1 et 500 µm.

7. Un procédé selon la revendication 1, dans lequel le rapport de l'aluminium au métal de transition dans le catalyseur est compris entre 70 et 350.

8. Un procédé selon la revendication 1, dans lequel la quantité de métal de transition dans le catalyseur (exprimée en éléments) est comprise entre 0,001 et 10 pour cent en poids et la quantité d'aluminium dans le catalyseur (exprimée en éléments) est comprise entre 1 et 40 pour cent en poids; et dans lequel le rapport Al/métal de transition dans le catalyseur (exprimé en éléments) est compris entre 25 et 10 000.

9. Un procédé selon l'une quelconque des revendications précédentes, dans lequel le métallocène est choisi parmi le groupe consistant en les dihalogénures de bis(n-butylcyclopentadiényl)métal, les hydridohalogénures de bis(n-butylcyclopentadiényl)métal, les monoalkyl-monohalogénures de bis(n-butylcyclopentadiényl)métal, les dialkyl-bis(n-butylcyclopentadiényl)métal, les halogénures de bis(tétrahydroindényl)métal et les dihalogénures de bis(indényl)métal.

10. Un procédé selon la revendication 9, dans lequel le métallocène est choisi parmi le groupe consistant en le dichlorure de bis(iso-butylcyclopentadiényl)zirconium, le dichlorure de bis(pentaméthylcyclopentadiényl)zirconium, le dichlorure de bis(tétrahydroindényl)zirconium, le dichlorure de bis(indényl)zirconium, le dichlorure de bis(1,3-diméthylcyclopentadiényl)zirconium, le dichlorure de bis(méthylcyclopentadiényl)zirconium, et le dichlorure de bis(n-butylcyclopentadiényl)zirconium.

11. Un procédé selon la revendication 1, dans lequel la concentration en α-oléfines dans le solvant est comprise entre 0,1 et 50 pour cent en poids.

12. Un procédé selon la revendication 11, dans lequel la concentration d'α-oléfines dans le solvant est comprise entre 0,1 et 30 pour cent en poids.

13. Un procédé selon la revendication 1, dans lequel le point d'ébullition du solvant est inférieur à 180° C.

14. Un procédé selon la revendication 1, dans lequel la pression dans l'étape (b) est inférieure à 4,1 MPa (600 psi).
